# EUROPEAN PATENT SPECIFICATION

(11) **EP 1 331 120 B1**
(45) Date of publication and mention of the grant of the patent: **05.07.2006**
(21) Application number: 03001604.2
(22) Date of filing: 24.01.2003
(51) Int. Cl.: B60J 7/047

(54) **Motor-vehicle sunroof**
Sonnendach für ein Kraftfahrzeug
Toit ouvrant pour un véhicule à moteur

(30) Priority: 29.01.2002 IT TO20020085
(43) Date of publication of application: 30.07.2003
(73) Proprietor: ITALDESIGN - GIUGIARO S.p.A, 10121 Torino (IT)
(72) Inventor: Balbinot, Carlo, 10040 VOLVERA (Torino) (IT); Rolando, Sandro, 10098 RIVOLI (Torino) (IT)
(74) Representative: Rondano, Davide

(56) References cited:
- EP-A- 0 989 009
- WO-A-00/29235
- WO-A-01/19633
- DE-A- 3 635 888
- GB-A- 291 829

## Description

The present invention relates to a motor-vehicle sunroof according to the preamble of Claim 1.

A motor-vehicle sunroof of this type is known from WO-A-0029235. The sunroof disclosed in this prior art document comprises a par of cover panels which can slide along guides in order selectively to close a roof opening of the vehicle. When the sunroof is in the open position, the cover panels are arranged below or above a fixed roof area, thus leaving a large portion of roof open. This known arrangement, however, does not allow completely to open the upper portion of the vehicle due to the presence of the fixed roof area.

It is therefore the object of the present invention to provide a motor-vehicle sunroof which is not affected by the problem of the prior art discussed above.

This object is fully achieved according to the present invention by a motor-vehicle sunroof as defined in the characterising portion of Claim 1.

In short, the invention is based on the idea of providing a sunroof of the above-mentioned type with an actuating apparatus arranged to move the whole set of panels (both the sliding ones and the not slidable one) in a hidden position below the loading platform of the baggage compartment of the vehicle, so as to leave the upper portion of the vehicle completely open. Preferably, the actuating apparatus is adapted to be servo-operated by means of remotely-controlled actuators (either electrical or hydraulic), thereby providing the greatest convenience and ease of use.

Further characteristics of the invention will result from the following detailed description of a preferred embodiment thereof, given purely by way of non-limiting example with reference to the appended drawings, in which:
Figure 1 is a perspective view which shows schematically the upper portion of a motor vehicle provided with a sunroof according to the present invention, wherein the sunroof is disposed in the closed arrangement with the sliding panels entirely closing the upper portion of the passenger compartment;
Figure 2 is a similar view to that of Figure 1, in which the sunroof is shown in the open arrangement with the front sliding panels stacked one over the other below the not slidable rear panel;
Figure 3 is a similar view to that of Figure 1, in which the sunroof is shown in the fully open arrangement with the front and rear panels hidden below the loading platform of the motor-vehicle baggage compartment;
Figure 4 is a similar view to that of Figure 3, in which the first two front panels of the sunroof are in the closed arrangement, whereas the third front panel and the rear panel are hidden below the loading platform of the motor-vehicle baggage compartment; and
Figure 5 is an exploded view of the sunroof and its actuating apparatus according to the present invention.

In the description and the claims which follow, terms such as "front" or "rear", "upper" or "lower", "longitudinal" or "transverse" are to be intended as referred to the mounted condition on the motor vehicle.

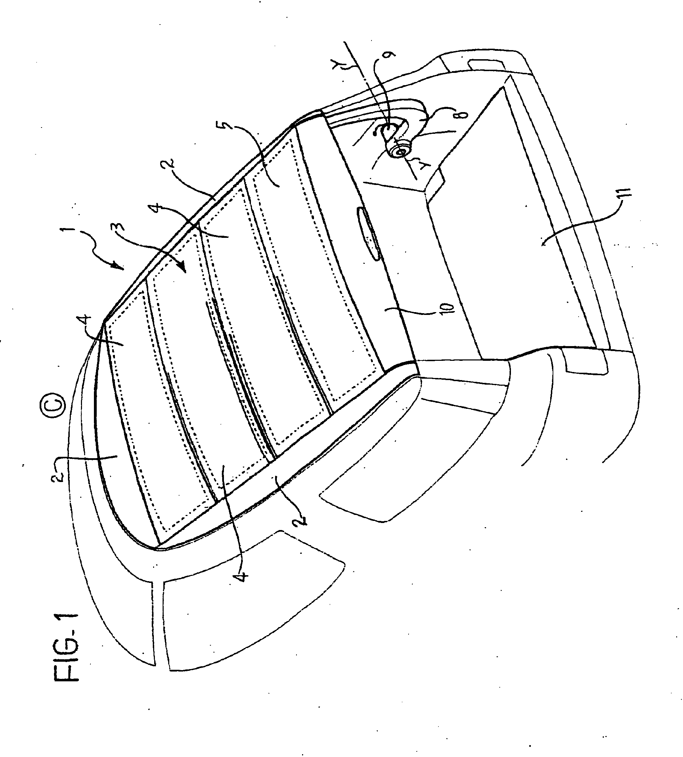

With reference to the figures, a motor-vehicle roof is generally indicated 1 and comprises
a fixed structure 2 rigidly connected to the motor-vehicle structure and running along the left, front and right sides of the roof, thereby forming a substantially U-shaped construction, and
a movable part 3 which in the closed position (Figure 1) entirely closes the substantially rectangular area encompassed by the three sides of the fixed structure 2 and by the rear window of the motor vehicle (not shown).

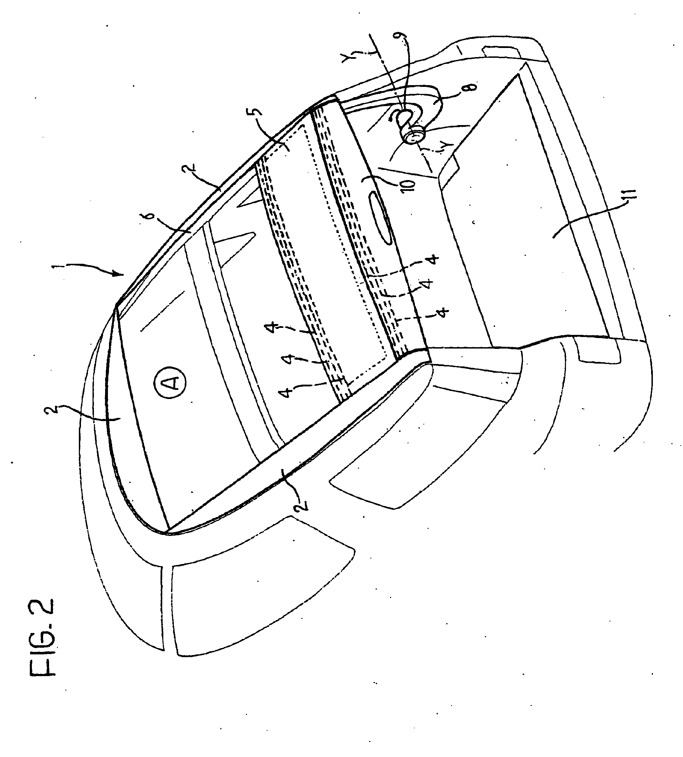

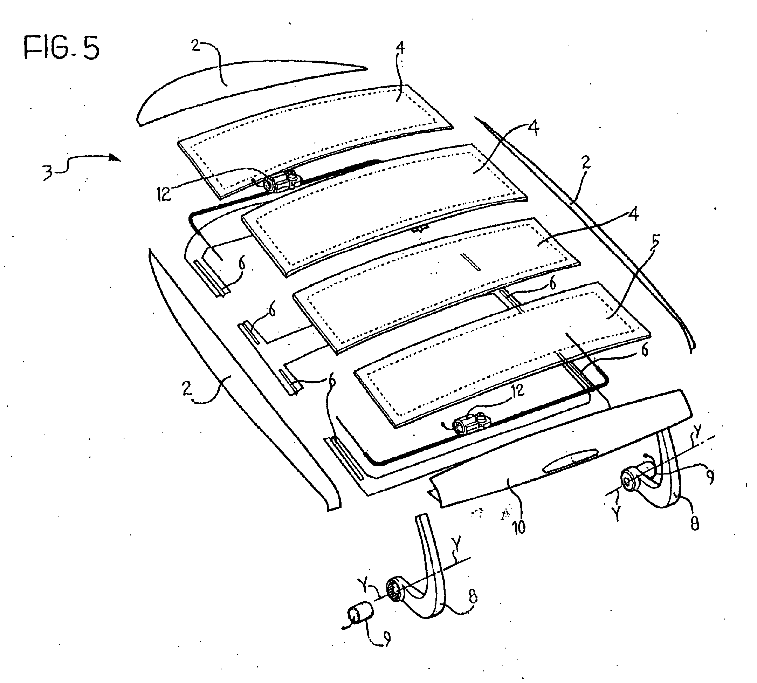

The movable part 3 is comprised of a set of substantially rectangular, rigid panels 4, 5 (four panels, in the shown example), mounted between the two parallel sides of the fixed structure 2 of the roof. The last rear panel, which is indicated 5 in the Figures and will be hereinafter referred to simply as rear panel, is not slidable with respect to the structure 2 of the roof, whereas the remaining panels 4, which will be hereinafter referred to simply as front panels, are longitudinally slidable along a pair of guides 6 (Figure 5) carried by the structure 2. The front panels 4 are interconnected as a shutter for being moved between a closed arrangement C (Figure 1), in which they are arranged side by side so as to fill the whole area encompassed by the three sides of the fixed structure 2 and by the rear panel 5, and an open arrangement A (Figure 2), in which they are stacked one over the other below the rear panel 5 so as to leave the above area open.

Two further intermediate arrangements (not shown) between these two arrangements A and C can be reached. A first intermediate arrangement is reached when only the last front panel 4, that is, the front panel adjacent to the rear panel 5, is put below the latter, whereby only the front portion of the area of the roof, which in the closed arrangement is occupied by the first front panel 4, is left open. A second intermediate arrangement is reached when also the second front panel is put below the rear panel 5, whereby a portion of the area of the roof equal to that of two adjacent panels is left open.

Preferably, the front panels 4 are provided with an uncoupling device (not shown) for uncoupling two adjacent panels so as to allow a selected front panel or group of front panels to be moved, while the other panels are held in their positions. For example, the first two front panels 4 can be released from the third one, so that only the rear portion of the area of the roof comprised between the second front panel 4 and the rear panel 5 is opened as a result of the movement of the third panel below the rear panel 5.

The movement of the sliding panels 4 among the different arrangements described above can be either performed by hand or, preferably, by means of remotely-controlled actuators (such as electrical actuators) generally indicated 12 in Figure 5, which will not be illustrated in detail in the present description as they are of per-se-known type.

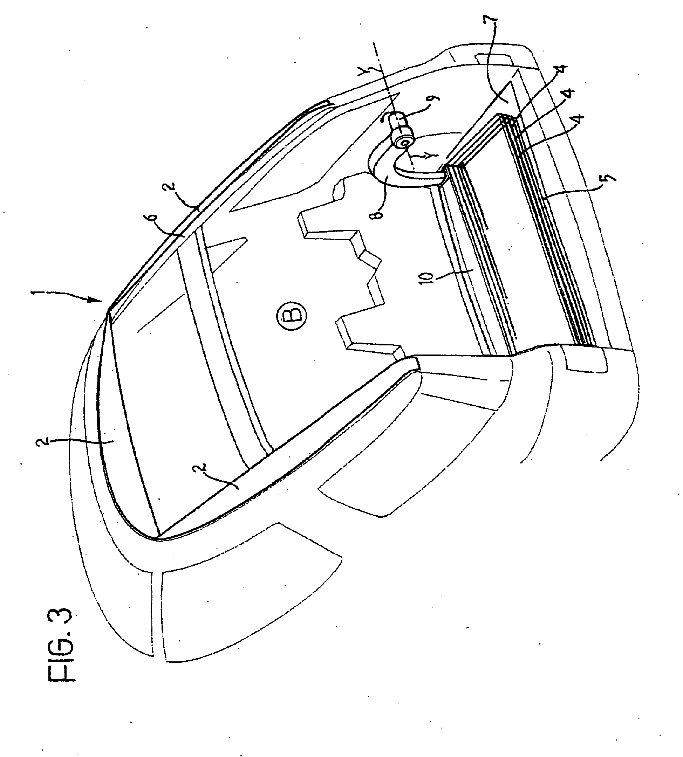

Figure 3 shows a fully open arrangement of the motor-vehicle sunroof, indicated B, in which the panels 4, 5 are removed from the upper portion of the passenger compartment and hidden below the loading platform of the baggage compartment (indicated 11 in Figures 1 and 2) into a proper space 7.
This arrangement can be reached directly starting from the open arrangement A, in which the front panels 4 are stacked one over the other below the rear panel 5, by means of an actuating mechanism comprising a pair of rotating arms 8. The arms 8 are articulated at their lower ends to a respective side of the vehicle structure for rotation about a horizontal transverse axis y under the control of a respective servo-motor 9 of per-se-known type, and are connected at their upper ends with a rear extension 10 of the sunroof secured to the rear panel 5 and co-operating to support the front panels 4 when these are stacked one over the other (arrangement A).

In order to move the sunroof from the arrangement A to the arrangement B, at first the arms 8 move the set of panels 4, 5 upwards and/or backwards, thereby disengaging the panels from the seals of the roof and thus avoiding any interference during the following steps of the movement, then rotate the set of panels nearly 180 degrees clockwise until the latter are hidden into the space 7 below the loading platform 11 of the baggage compartment. Clearly, in order to allow such a rotary motion of the set of panels the vehicle will be provided with a hatchback door capable of being tilted down in a per-se-known manner, for example by 90-degree rotation about a horizontal transverse axis, so as to come into substantial alignment with the loading platform 11 of the baggage compartment. Thus, prior to or simultaneously with the rotation of the set of panels, the rear window of the vehicle is lowered inside the hatchback door, then the hatchback door is tilted down in the above-mentioned way, and finally the loading platform 11 is shifted backwards sliding on the upper surface of the hatchback door, thereby allowing the set of panels to be received into the space 7.

With the hatchback door placed in the tilted-down position, all the upper portion of the vehicle, and possibly also the rear portion, is left open, whereby also vertically cumbersome luggage, such as for example bicycles, furniture etc., can be easily loaded on board of the vehicle.

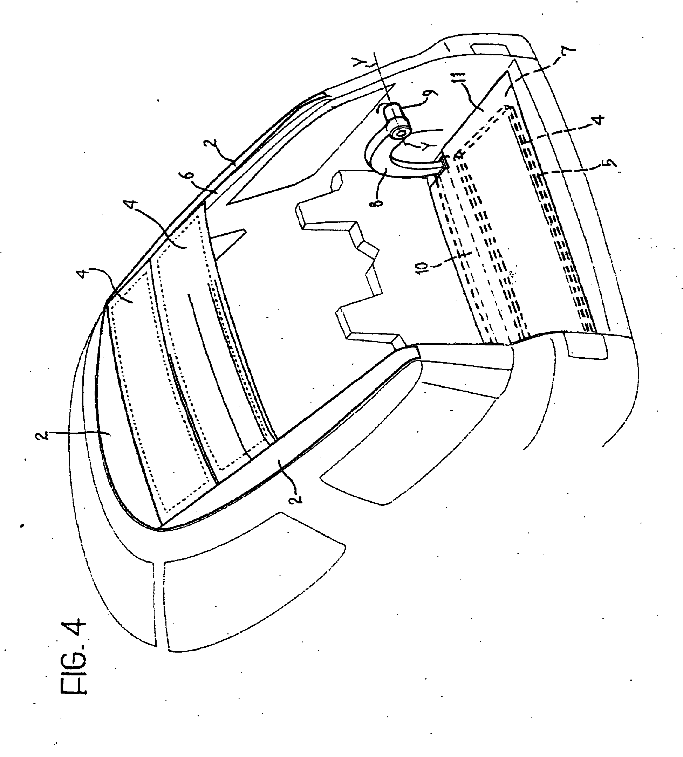

In case a group of sliding panels can be released from the others, as previously mentioned, for example the first two panels from the third one, then the sunroof can reach a further arrangement D, shown in Figure 4, in which the first two front panels 4 are held in their positions to close the front portion of the vehicle roof from above, whereas the third front panel 4 and the rear panel 5 are removed from the roof and hidden into the space 7 of the baggage compartment in the way described above.

Naturally, the principle of the invention remaining unchanged, embodiments and manufacturing details may vary widely from those described and illustrated purely by way of non-limiting example, the scope the invention being defined by the appended claims.

For example, although the description and the figures refer to an embodiment in which the front sliding panels 4 are stacked below the rear panel 5 in the open arrangement A, equivalently the front panels can be stacked above the rear panel.

## Claims

1. A sunroof (3) for a motor-vehicle having a passenger compartment and a baggage compartment with a loading platform (11), the sunroof comprising a plurality of substantially rectangular, rigid panels (4, 5), the last rear of which (5) is not slidable with respect to the vehicle structure and the other front ones (4) are longitudinally slidable; the sunroof (3) being arranged to assume a closed arrangement (C), in which the panels (4, 5) are arranged side by side so as to close the passenger compartment from above, and an open arrangement (A), in which all the slidable front panels (4) are placed below or above the rear panel (5), stacked one over the other, whereby a portion of the roof (3) not occupied by the rear panel (5) is left open; the sunroof being **characterised in that** it is provided with an actuating apparatus (8, 9) for moving the set of panels (4, 5) in a hidden position below the loading platform (11) of the baggage compartment.

2. A sunroof according to Claim 1, **characterised in that** the front panels (4) are interconnected two by two for sliding together as a shutter between the said open and closed arrangements (A, C).

3. A sunroof according to Claim 2, **characterised in that** the front panels (4) are arranged to assume a plurality of intermediate arrangements between the said open and closed arrangements (A, C), in each of which the front panels (4) are one after the other placed below or above the rear panel (5), whereby the portions of the roof (3) corresponding to the areas of these front panels (4) are left open.

4. A sunroof according to the claim 2 or 3, **characterised in that** at least two consecutive slidable front panels (4) are arranged to be uncoupled from each other, thereby allowing only a group of front panels (4) to be moved in the said hidden position.

5. A sunroof according to any of the preceding claims, **characterised in that** the actuating apparatus (8, 9) comprises a pair of rotating arms (8) articulated at their lower ends to a respective side of the vehicle structure for rotation about a horizontal transverse axis (y) and connected at their upper ends with a rear extension (10) of the sunroof (3) secured to the rear panel (5) and co-operating to support the front panels (4) when these are in the open arrangement (A).

6. A sunroof according to Claim 5, **characterised in that** the actuating apparatus (8, 9) further comprises actuator means (9) for controlling the rotating arms (8).

## Patentansprüche

1. Sonnendach (3) für ein Kraftfahrzeug, das einen Fahrgastraum und einen Kofferraum mit einer Ladeplattform (11) aufweist, wobei das Sonnendach eine Mehrzahl von im Wesentlichen rechteckigen starren Platten (4, 5) umfasst, wobei die hinterste (5) davon in Bezug auf das Fahrzeuggebäude nicht verschiebbar ist und die anderen vorne liegenden (4) der Länge nach verschiebbar sind; wobei das Sonnendach (3) dazu eingerichtet ist, eine geschlossenen Anordnung (C) einzunehmen, in welcher die Platten (4, 5) nebeneinander angeordnet sind, um den Fahrgastraum von oben zu verschließen, sowie eine offene Anordnung (A), in welcher alle verschiebbaren vorderen Platten (4) übereinandergestapelt unter- oder oberhalb der hinteren Platte (5) platziert werden und ein nicht von der hinteren Platte (5) eingenommener Teil des Daches (3) offen bleibt; wobei das Sonnendach **dadurch gekennzeichnet ist, dass** es mit einem Betätigungsapparat (8, 9) ausgestattet ist, um den Satz von Platten (4, 5) in eine verdeckte Position unter der Ladeplattform (11) des Kofferraums zu bewegen.

2. Sonnendach gemäß Anspruch 1, **dadurch gekennzeichnet, dass** jeweils zwei vordere Platten (4) miteinander verbunden sind, um zusammen als Verschluss zwischen der offenen und der geschlossenen Anordnung (A, C) zu gleiten.

3. Sonnendach gemäß Anspruch 2, **dadurch gekennzeichnet, dass** die vorderen Platten (4) dazu eingerichtet sind, eine Mehrzahl von Zwischenanordnungen zwischen der offenen und der geschlossenen Anordnung (A, C) einzunehmen, wobei in jeder davon die vorderen Platten (4) hintereinander unter- oder oberhalb der hinteren Platte (5) platziert werden und jene Teile des Daches (3), die den Bereichen dieser vorderen Platten (4) entsprechen, offen bleiben.

4. Sonnendach gemäß Anspruch 2 oder 3, **dadurch gekennzeichnet, dass** zumindest zwei hintereinanderliegende verschiebbare vordere Platten (4) dazu eingerichtet sind, voneinander gelöst zu werden, wodurch erlaubt wird, dass nur eine Gruppe vorderer Platten (4) in die verdeckte Position bewegt wird.

5. Sonnendach gemäß einem der vorhergehenden Ansprüche, **dadurch gekennzeichnet, dass** der Betätigungsapparat (8, 9) ein Paar von Dreharmen (8) umfasst, die an ihren unteren Enden zur Drehung um eine horizontale Querachse (y) mit einer jeweiligen Seite des Fahrzeuggebäudes gelenkig verbunden sind und an ihren oberen Enden mit einer hinteren Verlängerung (10) des Sonnendachs (3) verbunden sind, die an der hinteren Platte (5) befestigt ist und dazu beiträgt, die vorderen Platten (4) zu stützen, wenn sich diese in der offenen Anordnung (A) befinden.

6. Sonnendach gemäß Anspruch 5, **dadurch gekennzeichnet, dass** der Betätigungsapparat (8, 9) weiters Betätigungsmittel (9) zum Steuern der Dreharme (8) umfasst.

## Revendications

1. Toit ouvrant (3) pour un véhicule à moteur ayant un habitacle et un coffre à bagages avec plate-forme de chargement (11), le toit ouvrant comprenant une pluralité de panneaux rigides sensiblement rectangulaires (4, 5) dont le dernier panneau arrière (5) n'est pas coulissant par rapport à la structure de véhicule et les autres panneaux avant (4) peuvent coulisser longitudinalement ; le toit ouvrant (3) étant agencé pour adopter un agencement fermé (C), dans lequel les panneaux (4, 5) sont agencés côte à côte afin de fermer l'habitacle par le dessus, et un agencement ouvert (A), dans lequel tous les panneaux avant coulissants (4) sont placés en dessous ou au-dessus du panneau arrière (5), empilés les uns sur les autres, moyennant quoi une partie du toit (3) non occupée par le panneau arrière (5) est laissée ouverte ; le toit ouvrant étant **caractérisé en ce qu'**il est muni d'un appareil d'actionnement (8, 9) pour déplacer l'ensemble de panneaux (4, 5) dans une position masquée en dessous de la plate-forme de chargement (11) du coffre à bagages.

2. Toit ouvrant selon la revendication 1, **caractérisé en ce que** les panneaux avant (4) sont interconnectés deux par deux pour coulisser ensemble à la manière d'un volet entre lesdits agencements ouvert et fermé (A, C).

3. Toit ouvrant selon la revendication 2, **caractérisé en ce que** les panneaux avant (4) sont agencés pour adopter une pluralité d'agencements intermédiaires entre lesdits agencements ouvert et fermé (A, C), dans chacun desquels les panneaux avant (4) sont placés les uns après les autres en dessous ou au-dessus du panneau arrière (5), moyennant quoi les parties du toit (3) correspondant aux surfaces de ces panneaux avant (4) sont laissées ouvertes.

4. Toit ouvrant selon la revendication 2 ou 3, **caractérisé en ce qu'**au moins deux panneaux avant coulissants consécutifs (4) sont agencés de façon à être désaccouplés les uns des autres, permettant ainsi à un seul groupe de panneaux avant (4) d'être déplacé dans ladite position masquée.

5. Toit ouvrant selon l'une quelconque des revendications précédentes, **caractérisé en ce que** l'appareil d'actionnement (8, 9) comprend une paire de bras rotatifs (8) articulés au niveau de leurs extrémités inférieures à un côté respectif de la structure de véhicule pour tourner autour d'un axe transversal horizontal (y) et reliés au niveau de leurs extrémités supérieures à une extension arrière (10) du toit ouvrant (3) fixée au panneau arrière (5) et coopérant de façon à supporter les panneaux avant (4) quand ceux-ci sont dans l'agencement ouvert (A).

6. Toit ouvrant selon la revendication 5, **caractérisé en ce que** l'appareil d'actionnement (8, 9) comprend en outre des moyens d'actionneur (9) pour commander les bras rotatifs (8).
